# EUROPÄISCHE PATENTSCHRIFT

(11) **EP 3 231 551 B1**
(45) Veröffentlichungstag und Bekanntmachung des Hinweises auf die Patenterteilung: **26.09.2018**
(21) Anmeldenummer: 17159892.3
(22) Anmeldetag: 08.03.2017
(51) Int. Cl.: B23Q 1/01

(54) **POSITIONIERVORRICHTUNG, INSBESONDERE WERKZEUGPOSITIONIERVORRICHTUNG, FÜR EIN BEARBEITUNGSZENTRUM UND BEARBEITUNGSZENTRUM MIT DIESER**
POSITIONING DEVICE, IN PARTICULAR TOOL-POSITIONING DEVICE, FOR A PROCESSING CENTRE AND PROCESSING CENTRE COMPRISING SAME
DISPOSITIF DE POSITIONNEMENT, EN PARTICULIER DISPOSITIF DE POSITIONNEMENT D'OUTIL, POUR UN CENTRE D'USINAGE ET CENTRE D'USINAGE EN ÉTANT ÉQUIPÉ

(30) Priorität: 14.04.2016 DE 102016106936
(43) Veröffentlichungstag der Anmeldung: 18.10.2017
(73) Patentinhaber: F. Zimmermann GmbH, 73765 Neuhausen (DE)
(72) Erfinder: Podiebrad, Christian, 88250 Weingarten (DE); Demlang, Daniel, 72829 Engstingen (DE)
(74) Vertreter: Rüger Abel

(56) Entgegenhaltungen:
- EP-A2- 0 152 081
- DE-A1- 10 058 627

## Beschreibung

Die vorliegende Erfindung betrifft eine Positioniervorrichtung, insbesondere Werkzeugpositioniervorrichtung, für ein Bearbeitungszentrum, insbesondere ein Horizontalbearbeitungszentrum, und ein Bearbeitungszentrum mit einer derartigen Positioniervorrichtung.

Es sind Werkzeugmaschinen bspw. zur spanabgebenden Bearbeitung von Werkstücken in unterschiedlichen Konfigurationen, von kleinen Tischmaschinen bis zu großen Bearbeitungszentren zur Großteilebearbeitung bekannt. Insbesondere für die Großteilebearbeitung, z.B. beim Werkzeug-, Formen- und Modellbau oder bei der Produktion in der Automobil-, Luft- und Raumfahrtindustrie und in vergleichbaren Anwendungen, müssen komplexe Oberflächen an großen Werkstücken mit höchster Oberflächengüte und Bearbeitungsgeschwindigkeit ausgebildet werden. Hierzu werden üblicherweise hochpräzise Führungen, insbesondere Linearführungen verwendet, auf denen Schlitten in unterschiedlichen Richtungen verfahrbar geführt sind, um ein Werkstück und/oder eine Bearbeitungseinheit, z.B. einen Fräskopf, in dem Bearbeitungsraum präzise zu positionieren. Die Führungen weisen im Allgemeinen an den Schlitten vorgesehene Führungselemente, wie bspw. Führungsschuhe oder Schienenlaufelemente auf, die durch Rollkörper gelagert auf Führungsschienen geführt sind. Den Schlitten können Linearantriebe zugeordnet sein, um diese motorisch zu verfahren.

Es sind Horizontalbearbeitungsmaschinen oder -zentren bekannt, bei denen eine Bearbeitungsspindel, z.B. Frässpindel, in einer horizontalen Stellung an einem Träger gehaltert, in einem Arbeitsraum bewegbar und in beliebigen Drehlagen festlegbar ist, während ein Werkstück z.B. auf einer Werkstückpalette in horizontaler Stellung beladen und in eine vertikale Bearbeitungsstellung umgesetzt wird. Die Bearbeitungsspindel kann für höchste Flexibilität in einer ersten horizontalen Richtung, insbesondere der Längsrichtung einer Bearbeitungsmaschine oder eines Bearbeitungszentrums, einer zweiten horizontalen Richtung, insbesondere einer Querrichtung für eine Zu- und Rückstellbewegung der Bearbeitungsspindel relativ zu dem Werkstück und in einer vertikalen Richtung verfahrbar geführt und positionierbar sein. Dabei sollte bei möglichst hoher Flexibilität bezüglich der Positionierung in einem großen Bearbeitungsraum und bei gleichzeitiger einfacher, kompakter und kostengünstiger Bauweise der Maschine bzw. des Bearbeitungszentrums eine steife, stabile und präzise Führung geschaffen sein.

Aus der EP 2 666 566 B1 ist eine Drehmaschine bekannt, die eine auf einem Maschinenbett bewegbar angeordnete Werkzeugspindeleinheit aufweist. Die Werkzeugspindeleinheit enthält einen Längsschlitten, der auf dem Maschinenbett auf Linearführungen in Längsrichtung verfahrbar ist. An dem Längsschlitten ist ein Querschlitten in Querführungen verfahrbar geführt. An dem Querschlitten ist ein Vertikalschlitten in Vertikalführungen verfahrbar geführt. Insbesondere weist das Maschinenbett eine abgesetzte Konfiguration auf, wobei eine erste und eine zweite Führungsschiene der Längsführungen parallel zueinander in unterschiedlichen Höhen bzw. horizontalen Ebenen des Maschinenbetts angeordnet sind. Dadurch kann ein konstanter, vergrößerter Führungsabstand zwischen den Längsführungsschienen bei reduzierter Standfläche des Maschinenbetts erhalten werden. Der Längsschlitten trägt wiederum auf seiner Oberseite zwei parallele Führungsschienen, die in einer gemeinsamen Horizontalebene in Querrichtung verlaufen, um den Querschlitten zu führen. Der Querschlitten weist wiederum die Vertikalführungen für den Vertikalschlitten auf. Der Vertikalschlitten trägt die Werkzeugspindeleinheit zur Bearbeitung eines Werkstücks, die somit in drei zueinander senkrechten Richtungen in einem begrenzten Bereich des Arbeitsraums frei positioniert werden kann.

Ähnliche Werkzeugmaschinen sind auch aus der EP 0 152 081 A2, der DE 102 59 215 A1 und der DE 100 58 627 A1 bekannt.

Ausgehend hiervon ist es eine Aufgabe der vorliegenden Erfindung, eine Positioniervorrichtung für ein Werkstück oder ein Werkzeug und ein Bearbeitungszentrum mit einer derartigen Positioniervorrichtung zu schaffen, die eine hohe Genauigkeit und hohe Flexibilität bezüglich der Positionierung in einem möglichst großen Bearbeitungsraum bei gleichzeitiger einfacher, kompakter und kostengünstiger, jedoch steifer Bauweise ermöglichen. Insbesondere sollte eine steife, stabile und präzise Führung bei möglichst reduzierter Standfläche und möglichst geringen bewegten Maßen geschaffen sein.

Diese Aufgabe wird durch die erfindungsgemäße Positioniervorrichtung, insbesondere Werkzeugpositioniervorrichtung, für ein Bearbeitungszentrum mit den Merkmalen des Anspruchs 1 und das erfindungsgemäße Bearbeitungszentrum zur Bearbeitung von Werkstücken nach Anspruch 11 gelöst.

Gemäß einem ersten Aspekt der Erfindung ist eine Positioniervorrichtung, insbesondere Werkzeugpositioniervorrichtung, für ein Bearbeitungszentrum, mit einem ersten Schlitten und einem damit zusammenwirkenden zweiten Schlitten geschaffen. Der erste Schlitten trägt erste Führungselemente, die zur Wirkverbindung mit ersten Führungen eingerichtet sind, um den ersten Schlitten im Einsatz in einer ersten horizontalen Richtung verfahrbar zu führen. Der erste Schlitten trägt ferner zweite Führungen auf, die im Einsatz in einer zweiten horizontalen Richtung, quer zu der ersten horizontalen Richtung verlaufen. Der zweite Schlitten weist zweite Führungselemente zur Wirkverbindung mit den zweiten Führungen des ersten Schlittens auf, um den zweiten Schlitten im Einsatz in der zweiten horizontalen Richtung an dem ersten Schlitten verfahrbar zu führen. Die zweiten Führungselemente und die zweiten Führungen sind jeweils zum Teil in unterschiedlichen Höhen in einer vertikalen Richtung, die senkrecht zu der ersten und der zweiten horizontalen Richtung verläuft, derart angeordnet, dass der zweite Schlitten an dem ersten Schlitten an wenigstens zwei voneinander getrennten Führungsstellen geführt ist, deren Abstand bei einer Verfahrbewegung des zweiten Schlittens relativ zu dem ersten Schlitten variiert.

Bei der erfindungsgemäßen Positioniervorrichtung ist der zweite Schlitten im Einsatz auf dem ersten Schlitten in Führungen gelagert und geführt, die abschnittsweise in unterschiedlichen Höhen oder Ebenen derart angeordnet sind, dass sich der Führungsabstand beim Verfahren des zweiten Schlittens relativ zu dem ersten Schlitten verändert. Insbesondere können die ersten Führungselemente und die ersten Führungen den ersten Schlitten bspw. in Längsrichtung eines Bearbeitungszentrums führen, während die zweiten Führungselemente und die zweiten Führungen einer Führung in Querrichtung dienen können, um z.B. eine Bearbeitungseinheit des Bearbeitungszentrums in Richtung auf ein Werkstück zu zuzustellen oder von diesem weg zurückzustellen. Durch die erfindungsgemäße Konstruktion der zweiten Führungselemente und der zweiten Führungen kann erreicht werden, dass der Führungsabstand bei einer Zustellbewegung vergrößert wird, so dass eine zunehmend breitere und steifere, stabile und hochpräzise Führung, insbesondere in der Bearbeitungsposition, erreicht wird. Es kann ein relativ großer Führungs- und Arbeitsbereich bei reduzierter Standfläche bspw. eines Maschinenbetts oder Maschinengestells des Bearbeitungszentrums erreicht werden. Ein großer Führungsabstand in der Bearbeitungsposition kommt auch der Steifigkeit der Maschine bei der Bearbeitung und der Qualität des Bearbeitungsergebnisses zugute.

Soweit hier von Führungen und Führungselementen die Rede ist, sollen die Führungselemente lediglich mit den Führungen zusammenwirkende Gegenführungen bezeichnen. Es handelt sich stets um Linearführungen, die bspw. durch Führungsschienen und zugehörige Schienenlaufelemente gebildet sind, die auf den Führungsschienen vorzugsweise durch Rohrkörper geführt sind. Prinzipiell könnten auch Führungsschuhe in Form von Gleitkörpern in den Führungsschienen gleitend geführt sein. Selbst wenn ausgeführt ist, dass die Führungen Führungsschienen aufweisen und die Führungselemente Laufelemente oder Führungsschuhe aufweisen, soll dies keine spezielle Konstruktion oder Dimension der Schienen und Laufelemente implizieren. Die Führungsschienen können insbesondere kürzer oder länger als die Laufelemente bzw. Führungsschuhe ausgebildet sein. Die Führungsschienen können die Laufelemente oder Führungsschuhe aufnehmen oder von diesen aufgenommen sein. Soweit nichts anders ausgesagt ist, sind die Begriffe Führungen und Führungselemente bzw. Schienen und Schienenlaufelemente/Führungsschuhe gegeneinander austauschbar.

In einer bevorzugten Ausführungsform bilden der erste und der zweite Schlitten einen Kreuzschlitten, mit dem ein Werkstück und/oder ein Werkzeug wenigstens in die erste und die zweite horizontale Richtung motorisch verfahrbar ist bzw. sind, wobei die erste und die zweite horizontale Richtung zueinander senkrecht ausgerichtet sind. Die erste horizontale Richtung kann die Längsrichtung einer Maschine bzw. eines Bearbeitungszentrums kennzeichnen, während die zweite horizontale Richtung die Querrichtung kennzeichnen kann, die insbesondere der Zu- und Rückstellrichtung entsprechen kann. Insofern kann hier auf den ersten Schlitten als den Längsschlitten und auf den zweiten Schlitten als den Querschlitten Bezug genommen werden.

Der erste Schlitten weist vorzugsweise eine abgesetzt ausgebildete Oberseite auf, die eine erste, im Einsatz horizontale Ebene und eine zweite, im Einsatz horizontale Ebene, aufweist, die im Einsatz in der senkrechten Höhenrichtung oberhalb der ersten horizontalen Ebene angeordnet ist. Die horizontalen Ebenen dienen der Aufnahme der zweiten Führungen.

Insbesondere können die zweiten Führungen wenigstens ein erstes Paar paralleler Schienen, d.h. wenigstens zwei oder auch drei oder mehrere zueinander parallele Führungsschienen, aufweisen, die sich in der ersten horizontalen Ebene erstrecken. Ferner können die zweiten Führungen wenigstens ein weiteres Paar paralleler Führungsschienen, also wenigstens zwei, gegebenenfalls auch drei oder mehrere parallele Führungsschienen, aufweisen, die sich in der zweiten horizontalen Ebene erstrecken. Das zweite Paar Führungsschienen kann in der zweiten horizontalen Richtung mit dem ersten Paar Führungsschienen übereinanderliegend ausgerichtet sein oder auch nicht. Jedenfalls ermöglichen die in unterschiedlichen horizontalen Ebenen verlaufenden Paare von Führungsschienen die Variation des Führungsabstands bei einer Verfahrbewegung des zweiten Schlittens relativ zu dem ersten Schlitten.

In einer Ausführungsform weist die abgesetzte Oberseite des ersten Schlittens ferner eine Schrägebene auf, die zwischen der ersten horizontalen Ebene und der zweiten horizontalen Ebene angeordnet ist und diese miteinander verbindet, wobei die Schrägebene zu der ersten und der zweiten horizontalen Richtung und zu der vertikalen Richtung geneigt verläuft. Trotz kompakter Bauweise kann bei vergrößertem Führungsabstand und reduzierter Standfläche eine hohe Torsionssteifigkeit der Positioniervorrichtung erreicht werden.

Bei jeder beliebigen vorstehend erwähnten Ausführungsform der Positioniervorrichtung, bei der der erste Schlitten eine abgesetzte Oberseite aufweist, kann der zweite Schlitten ebenfalls eine abgesetzt ausgebildete Unterseite aufweisen, die vorzugsweise passend zu der abgesetzt ausgebildeten Oberseite des ersten Schlittens ausgebildet ist. Insbesondere kann die Unterseite des zweiten Schlittens eine erste horizontale Fläche, die der ersten horizontalen Ebene des ersten Schlittens zugeordnet ist, und eine zweite horizontale Fläche aufweisen, die der zweiten horizontalen Ebene des ersten Schlittens zugeordnet ist. Die erste horizontale Fläche kann wenigstens ein erstes Paar Schienenlaufelemente, also wenigstens zwei oder mehrere im Abstand zueinander angeordnete Schienenlaufelemente, der zweiten Führungselemente aufnehmen, die zur Wirkverbindung mit dem ersten Paar Führungsschienen des ersten Schlittens angeordnet und eingerichtet sind. Die zweite horizontale Fläche weist vorzugsweise wenigstens ein weiteres Paar Schienenlaufelemente, also wenigstens zwei oder auch drei oder mehrere voneinander beabstandete Schienenlaufelemente, der zweiten Führungselemente auf, die zur Wirkverbindung mit dem weiteren Paar Führungsschienen des ersten Schlittens angeordnet und eingerichtet sind. Es kann ferner eine die beiden horizontalen Flächen verbindende mittlere Schrägfläche, entsprechend der Schrägfläche der Oberseite des ersten Schlittens, an der Unterseite des zweiten Schlittens vorgesehen sein.

Insbesondere können die Schienenlaufelemente an der ersten oder zweiten Fläche des zweiten Schlittens und die Führungsschienen an der ersten und zweiten horizontalen Ebene des ersten Schlittens derart verteilt angeordnet und ausgerichtet sein, dass im Einsatz ein Führungsabstand zwischen einer ersten Führungsstelle, an der das erste Paar Schienenlaufelemente mit dem ersten Paar Führungsschienen im Eingriff steht, und einer zweiten Führungsstelle, an der das weitere Paar Schienenlaufelemente mit dem weiteren Paar Führungsschienen im Eingriff steht, variiert, während der zweite Schlitten relativ zu dem ersten Schlitten in der zweiten horizontalen Richtung verfahren wird. Insbesondere kann vorteilhafterweise erreicht werden, dass der Führungsabstand während einer Zustellbewegung eines von einem Werkzeug und einem Werkstück relativ zu dem anderen zunehmend vergrößert wird, um den maximalen Führungsabstand in der Bearbeitungsposition zu erhalten.

Um dies zu erreichen, können in einer Ausführungsform die erste Ebene und die an dieser vorgesehenen Führungsschienen eine größere Dimension in der zweiten horizontalen Richtung als die zweite Ebene und die an dieser vorgesehenen Führungsschienen aufweisen, während die erste Fläche und die an dieser vorgesehenen Schienenlaufelemente eine geringere Dimension in der zweiten horizontalen Richtung als die zweite Fläche und die an dieser vorgesehenen Schienenlaufelemente aufweisen können. Dann werden bei einer Zustellbewegung der Führungsabstand und die Steifigkeit und Stabilität der Führung zunehmend vergrößert.

In einigen Ausführungsformen kann der erste Schlitten ferner eine abgesetzte Unterseite aufweisen, die zu den Ebenen der Oberseite parallele Ebenen aufweist. Die Unterseite ist dann vorzugsweise passend zu einer entsprechend abgesetzt gestalteten Oberseite oder Tragfläche eines Maschinengestells oder -betts ausgebildet, das die ersten Führungen trägt. Eine derartige Gestaltung des ersten Schlittens reduziert dessen Masse und somit die bewegte Masse während einer geführten Bewegung des ersten Schlittens, was eine Ersparnis der Antriebsenergie und eine Reduktion des Verschleißes im Betrieb zur Folge hat.

In einer bevorzugten Anwendung wird die Positioniervorrichtung einer beliebigen vorstehend erwähnten Art zur Positionierung einer Bearbeitungseinheit in einem Bearbeitungszentrum, insbesondere einem Horizontalbearbeitungszentrum verwendet, wobei der zweite Schlitten ein Träger für eine Bearbeitungseinheit, wie bspw. eine Fräseinheit oder dgl., trägt. Der zweite Schlitten kann auch integral mit einem derartigen Träger ausgebildet sein. Der Träger kann ferner eine Vertikalführung zum vertikalen Verfahren der Bearbeitungseinheit aufweisen. Die Bearbeitungseinheit kann eine beliebige Bearbeitungsspindel zur Aufnahme eines Werkzeugs, wie bspw. eines Schleif-, Bohr-, Erodierwerkzeugs, eines Laserkopfs, eines Fräskopfs, etc. aufweisen.

In einem weiteren Aspekt der Erfindung ist ein Bearbeitungszentrum zur Bearbeitung von Werkstücken, insbesondere von Großteilen beim Werkzeug-, Formen- und Modellbau oder bei der Produktion in der Automobil- oder Flugzeugindustrie, geschaffen. Das Bearbeitungszentrum weist eine Bearbeitungsstation, die eine Bearbeitungseinheit zur Bearbeitung eines Werkstücks trägt, und eine Positioniervorrichtung, wie vorstehend beschrieben, auf, die zur Positionierung des Werkstücks und der Bearbeitungseinheit relativ zueinander eingerichtet ist. Dem ersten und dem zweiten Schlitten sind Antriebseinrichtungen zugeordnet, um sie in der ersten bzw. zweiten horizontalen Richtung entlang der ersten bzw. zweiten Führung motorisch zu verfahren. Die Positioniervorrichtung kann beliebige der vorstehend erläuterten Ausführungsformen einnehmen und Merkmale aufweisen, wobei die Vorteile der Positioniervorrichtung, insbesondere die hochpräzise und hochflexible Positionierung, eine steife, stabile und genaue Führung, ein einfacher, kompakter und kostengünstiger, jedoch steifer Aufbau, eine geringere Standfläche und reduzierte bewegte Massen, auch dem Bearbeitungszentrum insgesamt zugutekommen.

In einer bevorzugten Anwendung bildet das Bearbeitungszentrum ein Horizontalbearbeitungszentrum, bei dem die Bearbeitungseinheit in einer im Wesentlichen horizontalen Stellung an einem Träger gehaltert ist und Werkstücke auf einer Werkstückpalette in horizontaler Stellung beladen und in vertikaler Stellung bearbeitet werden können. Das Bearbeitungszentrum kann ferner eine Rüststation zum Aufspannen von Werkstücken auf eine Werkstückpalette und/oder eine Pufferstation zur vorübergehenden Zwischenlagerung einer Werkstückpalette mit darauf aufgespanntem Werkstück sowie Werkstückpositioniermittel aufweisen, die dazu eingerichtet sind, eine Werkstückpalette mit dem Werkstück während eines Transports zwischen einer von der Rüststation, der Pufferstation und der Bearbeitungsstation und einer anderen der Stationen von einer Horizontalstellung in eine Vertikalstellung oder umgekehrt umzusetzen. Das Bearbeitungszentrum weist ferner die Positioniervorrichtung auf, die dann zur Positionierung der Bearbeitungseinheit relativ zu dem Werkstück dienen kann.

Die Bearbeitungseinheit weist vorzugsweise eine Bearbeitungsspindel, insbesondere Frässpindel, auf, und die Bearbeitungsspindel kann weitere Dreh-, Schwenk- und/oder Bearbeitungsachsen aufweisen. Es können auch andere Bearbeitungseinheiten, wie bspw. Schleif-, Erodier- oder Bohreinheiten, Laserköpfe und andere Bearbeitungseinheiten verwendet werden.

Das Bearbeitungszentrum weist vorzugsweise ein Maschinengestell oder Maschinenbett auf, dessen Längserstreckung eine Längsrichtung definiert, die parallel zu der ersten horizontalen Richtung verläuft oder dieser entspricht. An dem Maschinenbett kann der erste Schlitten der Positioniervorrichtung in der Längsrichtung bewegbar gelagert und geführt sein. Insbesondere kann der erste Schlitten mit einem konstanten Führungsabstand an der ersten Führung bewegbar gelagert und geführt sein. Es kann ein langer Bewegungsweg in der Längsrichtung, von bis zu 30m oder sogar mehr, durch Vorsehen mehrerer in Reihe verbundener Module des Maschinenbetts mit den ersten Führungen geschaffen werden. Das Maschinenbett oder Maschinengestell kann ein langgestreckter Körper mit einer Basisseite sein, die zum Aufstellen auf einer Stellfläche in einem Bearbeitungsraum vorgesehen ist, oder kann auch mit der Stellfläche des Bearbeitungsraums integral ausgebildet sein.

In einer Ausführungsform kann das Maschinenbett eine obere Tragfläche aufweisen, die in Längsrichtung verlaufende Maschinenbett-Führungsschienen trägt, die die ersten Führungen bilden, auf denen der erste Schlitten in der ersten horizontalen Richtung, also der Längsrichtung verfahrbar geführt ist. Der zweite Schlitten kann z.B. auf dem ersten Schlitten in der zweiten horizontalen Richtung oder Querrichtung auf ein in einer Bearbeitungsposition befindliches Werkstück zu und von diesem weg verfahrbar sein. Der erste Schlitten kann auch als Längsschlitten bezeichnet werden, während der zweite Schlitten als Querschlitten bezeichnet werden kann. Wie bereits erwähnt, kann der Führungsabstand bei einer Zustellbewegung vorteilhafterweise vergrößert werden, was die Führungsstabilität erhöht.

In manchen Ausführungsformen kann die obere Tragfläche des Maschinenbetts eine abgesetzte Konfiguration mit einem ersten horizontalen Tragflächenabschnitt auf einer ersten vertikalen Höhe, der wenigstens eine oder mehrere der Maschinenbett-Führungsschienen trägt, und einem zweiten horizontalen Tragflächenabschnitt auf einer zweiten vertikalen Höhe aufweisen, der wenigstens eine weitere der Maschinenbett-Führungsschienen trägt, wobei der erste und der zweite horizontale Tragflächenabschnitt durch einen bezüglich einer Horizontal- und einer Vertikalebene vorzugsweise schräg verlaufenden mittleren Flächenabschnitt miteinander verbunden sind. Die Tragflächenabschnitte können also an den Verlauf der ersten oder der zweiten Ebene der Unterseite des ersten Schlittens angepasst sein bzw. diesem folgen. Der erste Schlitten mit der entsprechend abgesetzten Unterseite sowie einer abgesetzten Oberseite weist eine reduzierte Masse auf, die bewegt werden muss.

In bevorzugten Ausführungsformen der Erfindung ist der zweite Schlitten integraler Teil eines Trägers, insbesondere eines Trägers für eine Bearbeitungseinheit, wobei der Träger ferner vertikal ausgerichtete Führungen aufweisen kann, an denen ein Vertikalschlitten, insbesondere ein die Bearbeitungseinheit tragender Vertikalschlitten, in der vertikalen Richtung motorisch verfahrbar gelagert und geführt sein kann. Die Bearbeitungseinheit kann dann in allen drei kartesischen Koordinaten in einem Raum weitgehend flexibel und genau positioniert werden.

Die durch die Positioniervorrichtung ermöglichte Steifigkeit und Führungsstabilität macht das Bearbeitungszentrum auch für Großteilebearbeitung mit hohen Anforderungen an die Bearbeitungsgeschwindigkeit und -genauigkeit, wie sie bspw. von der Automobil- und Luftfahrtindustrie gestellt werden, besonders geeignet. Dabei sind schnelle und hochdynamische Verfahrbewegungen und präzise Positionierungen möglich, die eine hohe Oberflächenqualität bei der Bearbeitung auch größter Teile ermöglichen. Um ein Beispiel anzugeben, können bspw. Werkstücke aus Stahl mit einer Masse von mehreren, sogar mehr als 10 Tonnen in einem Arbeitsraum bearbeitet werden, der eine beliebige Länge, sogar mehr als 10 m, und eine Breite von bspw. 2-4 m, sowie eine Höhe von bspw. 2-3 m haben kann, wobei die Positioniervorrichtung für eine präzise Positionierung innerhalb dieses Arbeitsraums sorgt.

Weitere vorteilhafte Einzelheiten von Ausführungsformen der Erfindung ergeben sich aus den Unteransprüchen, der Zeichnung und der zugehörigen Beschreibung. Die Erfindung ist nachstehend anhand einer Zeichnung näher beschrieben, die beispielhafte, keinesfalls beschränkende Ausführungsformen der Erfindung zeigt, wobei gleiche Bezugszeichen in allen Figuren verwendet werden, um gleiche Elemente zu bezeichnen. Es zeigen:
Fig. 1 eine Perspektivansicht eines Horizontalbearbeitungszentrums zur Großteilebearbeitung in einer stark vereinfachten Darstellung;
Fig. 2 eine Seitenansicht des Horizontalbearbeitungszentrums nach Fig. 1 in stark vereinfachter Darstellung, unter Weglassung für die Erfindung unwesentlicher Komponenten;
Fig. 3 eine Seitenansicht einer in dem Horizontalbearbeitungszentrum nach Fig. 1 und 2 verwendbaren Positioniervorrichtung für eine Bearbeitungseinheit in stark schematisierter, prinziphafter Perspektivdarstellung;
Fig. 4 eine Perspektivansicht, betrachtet von schräg oben, eines ersten Schlittens, der Teil der Positioniervorrichtung nach Fig. 3 ist, in vereinfachter Darstellung;
Fig. 5 eine Perspektivansicht des ersten Schlittens nach Fig. 4, in stark vereinfachter Darstellung, betrachtet von schräg unten;
Fig. 6 eine Perspektivansicht, betrachtet von schräg oben, eines zweiten Schlittens und Trägers für die Bearbeitungseinheit, die Teil der Positioniervorrichtung nach Fig. 3 bilden, in vereinfachter Darstellung;
Fig. 7 eine Perspektivansicht des zweiten Schlittens und Trägers nach Fig. 6, in stark vereinfachter Darstellung, betrachtet von schräg unten; und
Figuren 8a und 8b die Positioniervorrichtung gemäß den Figuren 3-7 betrachtet in Seitenansicht in unterschiedlichen Stellungen bei einem Positioniervorgang.

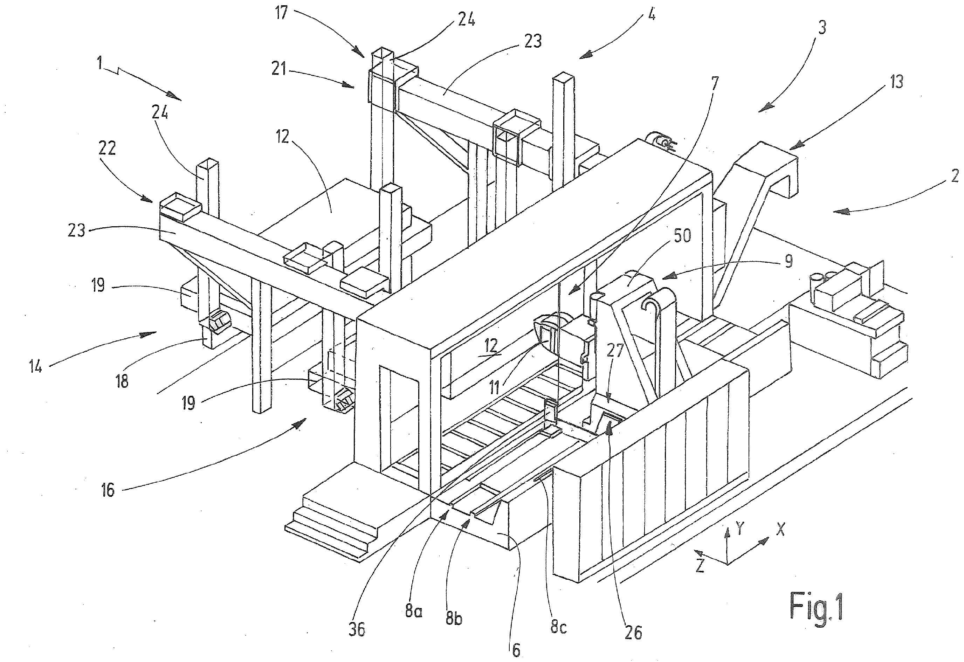

Fig. 1 zeigt in einer stark vereinfachten Perspektivdarstellung ein Horizontalbearbeitungszentrum 1, das sich zur Bearbeitung von Teilen, insbesondere von Großteilen, eignet, wie sie z.B. beim Werkzeug-, Formen- und Modellbau oder bei der Produktion für Kraftfahrzeuge und Flugzeuge gefertigt oder bearbeitet werden. Prinzipiell kann die Erfindung aber in einem beliebigen Bearbeitungszentrum 1 bzw. einer beliebigen Bearbeitungsmaschine verwendet werden, bei dem bzw. der es erforderlich oder gewünscht ist, ein Werkstück und ein Werkzeug relativ zueinander in einer gewünschten Position in einem Bearbeitungsraum in einer horizontaler Ebene und gegebenenfalls auch in vertikaler Richtung präzise zu positionieren.

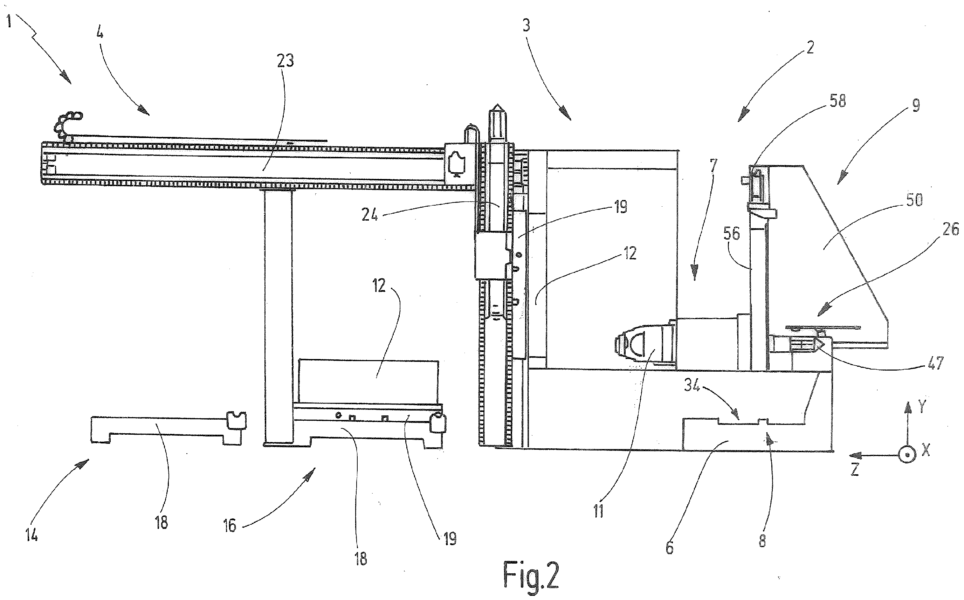

Wie aus Fig. 1 und Fig. 2, die das Bearbeitungszentrum 1 in einer Seitenansicht zeigt, wobei einige für die Erfindung unwesentliche Komponenten der Anschaulichkeit wegen weggelassen sind, ersichtlich, weist das Bearbeitungszentrum 1 eine Bearbeitungsstation 2, einen Arbeitsraum 3 und ein Handhabungssystem 4 auf. Die Bearbeitungsstation 2 weist eine auf einem Maschinenbett 6 bewegbar gelagerte Bearbeitungseinheit 7 auf, die insbesondere eine Fräseinheit oder auch eine Bohreinheit, Erodiereinheit oder ein Laserkopf sein kann.

Die Bearbeitungseinheit 7 ist auf in Fig. 1 angedeuteten Längsführungen 8 längs des Maschinenbetts 6 in einer ersten horizontalen Richtung x, hier der Längsrichtung des Bearbeitungszentrums 1, verschiebbar gelagert und geführt. Die Bearbeitungseinheit 7 weist einen Träger 9 auf, der in einer zweiten horizontalen Richtung z senkrecht zu der ersten horizontalen Richtung auf den Arbeitsraum 3 zu und von diesem weg linear verschiebbar gelagert und geführt ist. Der Träger 9 trägt eine Bearbeitungsspindel 11, z.B. eine Frässpindel, die an dem Träger 9 in vertikaler Richtung verschiebbar gelagert und in horizontaler Lage gehalten ist. Die Bearbeitungsspindel 11 ragt somit mit ihrer Längserstreckung in Richtung auf den Arbeitsraum 3 vor und trägt an ihrem freien Ende ein hier nicht näher dargestelltes Bearbeitungswerkzeug, z.B. Fräswerkzeug, zur Bearbeitung eines Werkstücks 12. Die Bearbeitungsspindel 11 kann weitere Dreh-, Schwenk- und/oder Bearbeitungsachsen, wie bspw. zueinander orthogonale Schwenkachsen A, B oder eine mit der Längsmittelachse der Bearbeitungseinheit 7 zusammenfallende Drehachse C oder Bearbeitungsachse, aufweisen, wie dies allgemein bekannt ist.

Wie aus den Figuren 1 und 2 ersichtlich, ist das Werkstück 12 in dem Arbeitsraum 3 in vertikaler Stellung gehalten, um von der Bearbeitungsspindel 11 bearbeitet zu werden. Durch die vertikale Bearbeitungsposition können Späne bei der Bearbeitung des Werkstücks 12 frei zum Boden des Arbeitsraums 13 fallen und durch einen hier lediglich angedeuteten Späneförderer 13 leicht wegbefördert werden.

Zur Bereitstellung des Werkstücks 12, zur Beschickung des Werkstücks 12 in den Arbeitsraum 3 und zum Entfernen desselben aus dem Arbeitsraum 3 ist das Handhabungssystem 4 vorgesehen. Dieses umfasst in der hier dargestellten beispielhaften Ausführungsform des Bearbeitungszentrums 1 eine Rüststation 14, eine Pufferstation 16 und ein Linearachsensystem 17.

Die Rüststation 14 weist eine Ablage 18 auf, die durch einen Ablagetisch oder einen speziell eingerichteten Ablagebereich des Fundaments gebildet sein kann und auf der eine Werkstückpalette 19 positioniert werden kann, die das Werkstück 12 für die Bearbeitung aufnimmt. Die Verwendung einer Werkstückpalette 19 als Träger für das Werkstück 12 für den Transport und bei der Bearbeitung in dem Bearbeitungszentrum 1 ist insbesondere bei Großteilen mit großen Dimensionen und hohem Gewicht von Vorteil, wenngleich in manchen Anwendungen nicht unbedingt erforderlich.

Die Werkstückpalette 19 kann durch einen im Wesentlichen quaderförmigen Körper gebildet sein, ist prinzipiell aber auf keine spezielle Form beschränkt. Auf der Oberseite der Werkstückpalette 19 wird das Werkstück 12 in der Rüststation 14 positioniert und für die Bearbeitung passend vorbereitet und fixiert. Das Werkstück 12 ist in Fig. 1 ebenfalls durch einen im Wesentlichen quaderförmigen Körper dargestellt, kann aber ein beliebigen kubisches, rotationssymmetrisches oder in sonstiger Weise gestaltetes oder zu gestaltendes Werkstück sein.

Neben der Rüststation 14 ist vorzugsweise, jedoch nicht notwendigerweise ferner die Pufferstation 16 vorgesehen, die einer Zwischenlagerung des in der Rüststation 14 eingerichteten und auf die Werkstückpalette 19 aufgespannten Werkstücks 12 dient, bevor dieses in den Arbeitsraum beschickt und dort bearbeitet wird, wie auch danach. Die Pufferstation 16 oder mehrere derartige Pufferstationen 16 ermöglichen es, Werkstücke 12 dem Arbeitsraum 3 zuzuführen, in diesem zu bearbeiten oder von diesem zu entfernen, während andere Werkstücke gleichzeitig in der Rüststation 14 vorbereitet werden, was zu einer Verkürzung der gesamten Bearbeitungszeit beitragen kann. Die Pufferstation 16 kann in gleicher Weise wie die Rüststation 14 mit einer hier nicht näher bezeichneten Ablage in Form eines Ablagetisches oder eines an dem Fundament speziell eingerichteten Ablagebereiches eingerichtet sein.

Zur Beschickung des auf der Werkstückpalette 19 aufgespannten Werkstücks 12 in den Arbeitsraum 3 und zum Entfernen desselben ist das Linearachsensystem 17 vorgesehen. Dieses umfasst eine erste und eine zweite Linearachsenanordnung 21, 22, die auf beiden Seiten der Rüststation 14 und der Pufferstation 16, betrachtet in Längsrichtung x des Bearbeitungszentrums 1, parallel zueinander angeordnet sind. Die erste und die zweite Linearachsenanordnung 21, 22 sind im Wesentlichen identisch ausgebildet und jede weist wenigstens eine horizontale Linearachse 23 und wenigstens eine vertikale Linearachse 24 auf. Jede Linearachse 23, 24 ist durch ein Modul gebildet, das einen durch einen hier nicht näher dargestellten Motor angetriebenen Schlitten oder ein sonstiges angetriebenes Element aufweist, das entlang der jeweiligen horizontalen bzw. vertikalen Achse verfahren werden kann.

Die beiden Linearachsenanordnungen 21, 22 sind dazu eingerichtet, eine Werkstückpalette 19 von beiden Seiten zu ergreifen und in vertikaler Richtung sowie in horizontaler Richtung zu transportieren. Die Linearachsenanordnungen 21, 22 sind hier ferner zur Verschwenkung der Werkstückpalette 19 eingerichtet, um sie von einer Horizontalstellung auf der Ablage 17 der Rüststation 14 oder der Pufferstation 16 in eine Vertikalstellung zur Bearbeitung in dem Arbeitsraum 3 und umgekehrt zu überführen. Zu diesem Zweck könnte aber auch eine gesonderte Dreh- bzw. Schwenkeinrichtung vorgesehen sein. Jedenfalls wird bei dem hier dargestellten beispielhaften Horizontalbearbeitungszentrum 1 die Werkstückpalette 19 mit dem Werkstück 12 in einer definierten Bearbeitungsposition in dem Arbeitsraum 3 positioniert und gehalten, während die Bearbeitungsspindel 11 durch eine Positioniervorrichtung 26 in die gewünschten Arbeitspositionen in den Raumrichtungen x, y und z verfahren wird, um das Werkstück 12 zu bearbeiten und komplexe Oberflächen an diesem zu schaffen.

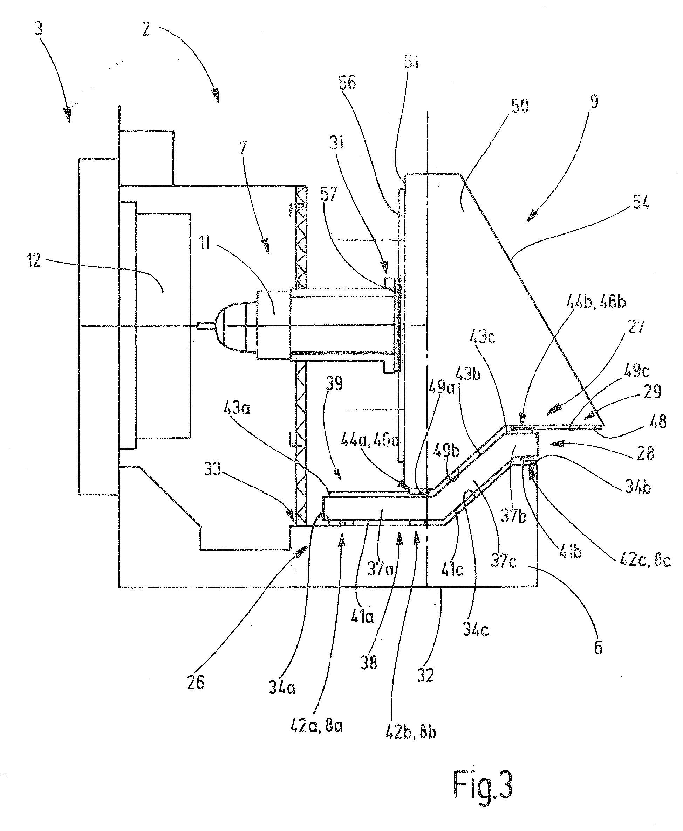

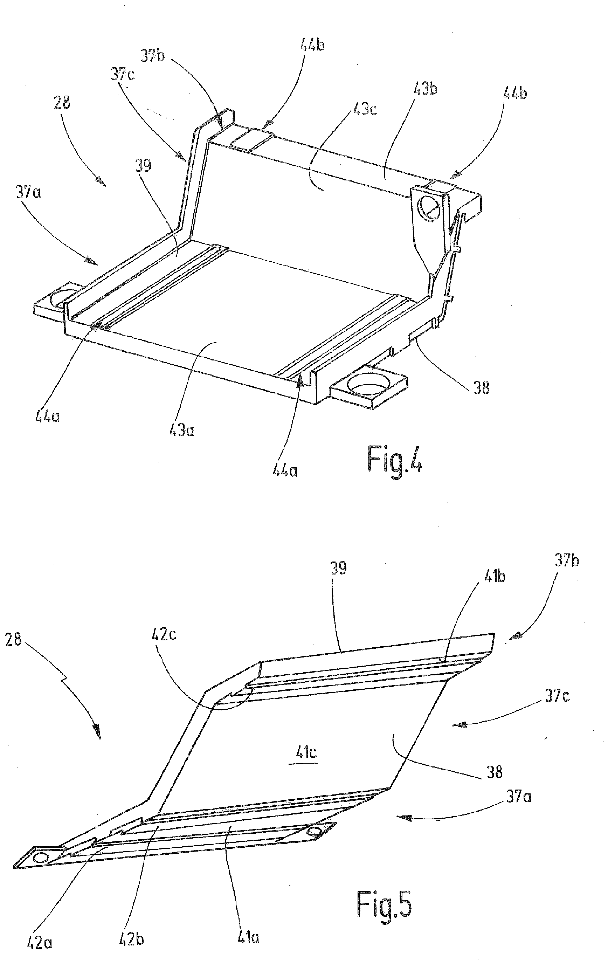

Die Positioniervorrichtung 26 ist zusätzlich in Fig. 3 in einer vereinfachten Seitenansicht dargestellt. Zu der Positioniervorrichtung 26 gehört das Maschinenbett bzw. -gestell 6 mit den Längsführungen 8, ein auf dem Maschinenbett 6 angebrachter Kreuzschlitten 27, der durch einen ersten Schlitten 28 und einen zweiten Schlitten 29 gebildet ist, der Träger 9 sowie ein an diesem verschiebbar gelagerter und geführter dritter Schlitten 31, an dem die Bearbeitungsspindel 11 montiert ist. Die Komponenten der Positioniervorrichtung 26 sind zum Teil in den Figuren 4-7 isoliert dargestellt und weiter nachstehend in größeren Einzelheiten erläutert.

Unter Bezugnahme auf die Figuren 1-3 weist das Maschinenbett 6 eine untere Basisseite 32, die zum Aufstellen auf einem Boden eines Raums eingerichtet ist, und eine Oberseite 33 auf, die eine obere Tragfläche bildet. Auf der Tragfläche 33 sind die hier auch als erste Führungen bezeichnete Längsführungen 8 in Form von Führungsschienen 8a, 8b und 8c angebracht, die parallel und im Abstand zueinander in der Längsrichtung bzw. der ersten horizontalen Richtung x verlaufen.

Die obere Tragfläche 33 des Maschinenbetts 6 weist hier eine abgesetzte Konfiguration mit einem ersten horizontalen Tragflächenabschnitt 34a, einem zweiten horizontalen Tragflächenabschnitt 34b, der in vertikaler Richtung y zu dem ersten horizontalen Abschnitt 34a versetzt und oberhalb dessen verläuft, sowie einen mittleren Tragflächenabschnitt 34c auf, der die beiden horizontalen Tragflächenabschnitte 34a, 34b miteinander verbindet und als eine Schrägfläche ausgebildet ist, die gegenüber der horizontalen und der vertikalen Ebene geneigt verläuft. Wie veranschaulicht, ist die Breite bzw. die Dimension des ersten horizontalen Tragflächenabschnitts 34a in der zweiten horizontalen Richtung z deutlich größer als die entsprechende Breite bzw. Dimension des zweiten horizontalen Abschnitts 34b.

Der erste horizontale Tragflächenabschnitt 34a trägt hier zwei Führungsschienen 8a, 8b der Längsführungen 8, während die dritte Führungsschiene 8c auf dem zweiten Tragflächenabschnitt 34b angeordnet ist. Dies ergibt eine steife Führungsanordnung für die auf dem Maschinenbett 6 gelagerten und geführten Komponenten, wobei die abgesetzte Konfiguration des Maschinenbetts 6 und die Anordnung der ersten Führungen 8 auch einer hohen Torsionssteifigkeit und Stabilität bei der Bearbeitung des Werkstücks 12 mit der Bearbeitungsspindel 11 zugutekommt.

Gegebenenfalls kann in manchen Anwendungen auch die Oberseite 33 durch eine einzige ebene horizontale Fläche gebildet sein, und es können auch lediglich zwei Führungsschienen als Längsführungen 8 ausreichen oder auch mehr als drei Führungsschienen vorgesehen sein.

Auf den Führungsschienen 8a-c ist der Kreuzschlitten 27 durch einen in den Figuren 1 und 2 angedeuteten Motor 36 verfahrbar geführt. Wie bereits erwähnt, weist der Kreuzschlitten einen ersten Schlitten 28, der unmittelbar auf der oberen Tragfläche 34 des Maschinenbetts 6 angebracht ist, und den zweiten Schlitten 29 auf, der auf dem ersten Schlitten 28 in der zweiten horizontalen Richtung z bewegbar angebracht ist. Der erste Schlitten 28 weist ein der abgesetzten Konfiguration der oberen Tragfläche 34 entsprechendes abgesetztes Profil mit einem ersten horizontalen Abschnitt 37a, einem zweiten horizontalen Abschnitt 37b, der zu dem ersten horizontalen Abschnitt 37a in Höhenrichtung y versetzt und oberhalb dessen verläuft, sowie einen dazwischen verlaufenden Schrägabschnitt 37c auf, der den ersten und den zweiten horizontalen Abschnitt 37a,b miteinander verbindet.

Der erste Schlitten 28 weist eine der Oberseite 33 des Maschinenbetts 6 zugewandte Unterseite 38 und eine dieser gegenüberliegende Oberseite 39 auf, wobei die Seiten 38, 39 eine entsprechende abgesetzte Konfiguration aufweisen, zueinander parallel verlaufen und die Abschnitte 37a-c begrenzen. Der erste Schlitten 28 mit der Unterseite 38 bzw. der Oberseite 39 ist zusätzlich isoliert in Perspektivansichten in den Figuren 4 und 5 dargestellt.

Die Unterseite 38 weist einen ersten horizontalen Flächenabschnitt 41a, der im geringen Abstand parallel zu dem ersten horizontalen Tragflächenabschnitt 34a verläuft, einen zweiten horizontalen Flächenabschnitt 41b, der in geringem Abstand und parallel zu dem zweiten horizontalen Tragflächenabschnitt 34b verläuft, und einen dazwischen verlaufenden, die Flächenabschnitte 41a, 41b miteinander verbindenden mittleren Schrägflächenabschnitt 41c auf, der in geringem Abstand und parallel zu dem schrägen Tragflächenabschnitt 34c verläuft.

Der erste horizontale Flächenabschnitt 41a der Unterseite 38 des ersten Schlittens 28 weist hier zwei Führungselemente 42a, 42b auf, die hier als längliche Schienenlaufelemente ausgebildet sind und als erste Führungselemente bezeichnet werden, die mit den ersten Führungen 8, genauer gesagt den Führungsschienen 8a, 8b zur Führung des ersten Schlittens 28 zusammenwirken. An dem zweiten horizontalen Flächenabschnitt 41b ist ein weiteres erstes Führungselement 42c vorgesehen, das als ein längliches Schienenlaufelement (vgl. Fig. 5) ausgebildet ist, das mit der Führungsschiene 8c zusammenwirkt.

Es sollte beachtet werden, dass die ersten Führungselemente 42a-c hier nur beispielhaft als längliche Laufelemente veranschaulicht sind, die in die Führungsschienen 8a-c eingreifen. Die Schienenlaufelemente 42a-c, wie auch weitere nachstehend erläuterte Schienenlaufelemente, können an den Führungsschienen durch hier nicht näher dargestellte Wälzkörper, z.B. Kugeln, geführt sein, die zwischen Laufbahnen einerseits an dem ersten Schlitten 28 und andererseits an den Führungsschienen 8a-c reibungsarm abrollen. Es sollte ferner beachtet werden, dass hier, wie auch im Folgenden, die Führungselemente oder Schienenlaufelemente allgemein als Gegenführungen zu den jeweiligen Führungen bzw. Führungsschienen zu verstehen sind, so dass die Führungen und die Führungselemente generell gegeneinander austauschbar sind. Prinzipiell sind, z.B. bei kleineren Werkzeugmaschinen, auch Gleitführungen möglich.

Zurückkehrend zu den Figuren 3-5 weist die Oberseite 39 entsprechend eine erste horizontale Ebene 43a, eine zweite horizontale Ebene 43b, die in vertikaler y-Richtung zu der ersten horizontale Ebene 43a versetzt und oberhalb derer angeordnet ist, sowie eine dazwischen verlaufende und die erste mit der zweiten horizontalen Ebene 43a, 43b verbindende mittlere Ebene 43c auf. Diese ist als Schrägebene 43c ausgebildet, die zu einer horizontalen und einer vertikalen Ebene geneigt verläuft. Die Breite der ersten und der zweiten horizontalen Ebene 43a, 43b entspricht im Wesentlichen den horizontalen Flächenabschnitten 41a, 41b an der Unterseite 38 des ersten Schlittens 28. Insofern ist die erste horizontale Ebene 43a deutlich breiter gestaltet als die zweite horizontale Ebene 43b.

Wie insbesondere aus Fig. 4 hervorgeht, weist die Oberseite 29 zweite Führungen 44 auf, zu denen ein erstes Paar Führungsschienen 44a und ein zweites Paar Führungsschienen 44b gehören. Die Führungsschienen 44a verlaufen im Abstand und parallel zueinander in der zweiten horizontalen Richtung z über die gesamte Breite des ersten horizontalen Flächenabschnitts 43a hinweg. Die beiden Führungsschienen 44b des zweiten Paars Führungsschienen verlaufen ebenfalls in der zweiten horizontalen Richtung z über die gesamte Breite des zweiten horizontalen Flächenabschnitts 43b der Oberseite 39 hinweg. Das zweite Paar Führungsschienen 44b ist hier in Verlängerung zu dem ersten Führungsschienenpaar 44a angeordnet oder, anders gesagt, zu diesem derart ausgerichtet, dass die Führungsschienenpaare 44a, 44b in vertikaler Richtung übereinander angeordnet sind, was vorteilhaft, jedoch nicht zwingend erforderlich ist.

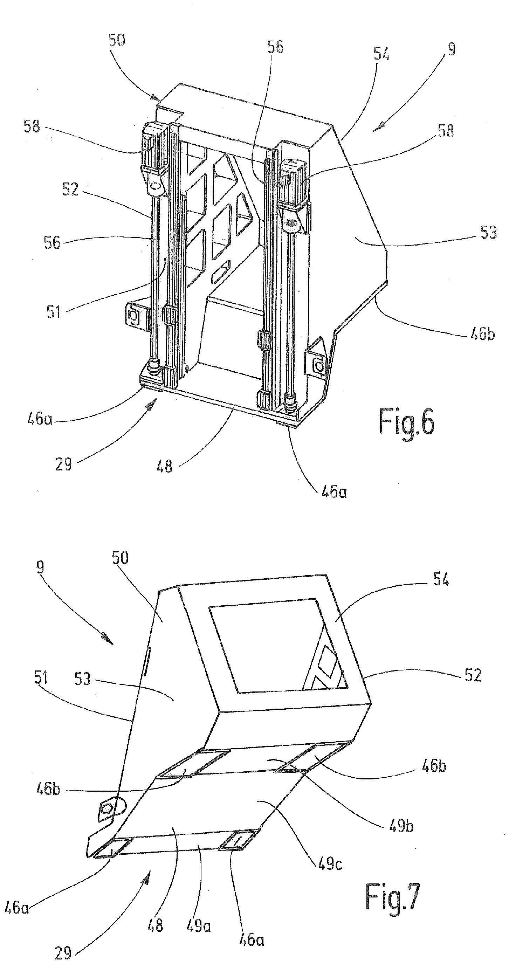

Bezugnehmend auf die Figuren 4, 6 und 7 sind in den zweiten Führungen 44 Führungselemente 46 des zweiten Schlittens bzw. Querschlittens 29 durch einen in Fig. 2 angedeuteten Motor 47 in der zweiten horizontalen Richtung bzw. Querrichtung z verfahrbar geführt. Die Führungselemente 46, die hier als zweite Führungselemente bezeichnet werden, sind wiederum durch vorzugsweise Wälzkörper gelagerte Führungsschuhe oder Schienenlaufelemente gebildet, die mit den Führungsschienen 44a, 44b zusammenwirken. Die zweiten Führungselemente 46 sind, wie insbesondere auch aus den Figuren 6 und 7 hervorgeht, an einer abgesetzt ausgebildeten Unterseite 48 des zweiten Schlittens 29 angeordnet, die passend zu der abgesetzt ausgebildeten Oberseite 39 des ersten Schlittens 28 ausgebildet ist. Insbesondere weist die Unterseite 48 des zweiten Schlittens 29 eine erste horizontale Fläche 49a, die der ersten horizontalen Ebene 43a im geringen Abstand gegenüberliegt, eine zweite horizontale Fläche 49b, die der zweiten horizontalen Ebene 43b im geringen Abstand gegenüberliegt, und eine die beiden horizontalen Flächen 49a, 49b verbindende mittlere Fläche 49c auf, die als Schrägfläche entsprechend dem Verlauf der schrägen Ebene 43c ausgebildet ist und im geringen Abstand zu dieser verläuft.

An der ersten horizontalen Fläche 49a ist ein erstes Paar der zweiten Führungselemente 46a parallel und im Abstand zueinander, entsprechend dem Abstand der Führungsschienen 44a angeordnet. An der zweiten horizontalen Fläche 49b ist ein zweites Paar 46b der zweiten Führungselemente 46 parallel und im Abstand zueinander, entsprechend dem Abstand der Führungsschienen 44b angeordnet. Die zweiten Führungselemente 46a, 46b erstrecken sich jeweils über die gesamte Breite (in z-Richtung) der ersten bzw. zweiten horizontalen Fläche 49a bzw. 49b hinweg. Wie aus den Figuren 3, 6 und 7 ersichtlich, ist die Breite der ersten horizontalen Fläche 49a deutlich geringer als die Breite der zweiten horizontalen Fläche 49b, was auch für die Länge des ersten Paars zweiter Führungselemente 46a im Vergleich zu dem zweiten Paar 46b gilt.

Weiterhin bezugnehmend auf die Figuren 3, 6 und 7 ist ersichtlich, dass der zweite Schlitten oder Querschlitten 29 hier integral mit dem Träger 9 für die Bearbeitungseinheit 7 ausgebildet ist. Der Träger 9 ist durch eine Säule 50 gebildet, die eine rechteckige, offene Vorderseite, die im Einsatz dem Arbeitsraum 3 zugewandt ist, im Wesentlichen dreieckige Seiten 52, 53, eine im Wesentlichen rechteckige, durchbrochene Rückseite 54 und eine abgesetzt ausgebildete Unterseite aufweist, die die Unterseite 48 des zweiten Schlittens 29 bildet. Die Öffnungen bzw. Durchbrüche in der Vorderseite 51, der Rückseite 54 und in den Seiten 52, 53 (wobei hier die Öffnungen lediglich in der linken Seite 52 in Fig. 6 angedeutet sind), reduzieren die Masse der Säule 50 und somit die im Betrieb bewegte Masse, was vorteilhafterweise Antriebsenergie einsparen und Verschleiß reduzieren kann. Die Rückseite 54 ist in Bezug auf die vertikale Ebene schräg ausgerichtet, um während der Bearbeitung eines Werkstücks 12 auf die Bearbeitungsspindel 11 einwirkende Kräfte gut über die Säule 50 und den Kreuzschlitten 27 auf das Maschinenbett 6 abzuleiten.

An der Vorderseite 51 trägt die Säule 50 vertikale Führungen 56 auf, die durch zwei im Abstand und parallel zueinander in der vertikalen Richtung y verlaufende Führungsschienen 56a, 56b gebildet sind. Die Führungsschienen 56a, 56b erstrecken sich hier über die gesamte Höhe der Vorderseite 51 hinweg. Die Führungsschienen 56a, 56b stehen in Wirkverbindung mit Führungselementen 57, die in Form von Führungsschuhen oder Laufschienenelementen 57a, 57b an dem dritten Schlitten 31 im Abstand zueinander, entsprechend dem Abstand der Führungsschienen 56a, 56b angeordnet sind. Zum Verfahren des dritten Schlittens 31 längs der Führungen 56 in der Vertikalrichtung y sind an der Säule 50 Motoren 58 vorgesehen, die insbesondere aus den Figuren 2 und 6 ersichtlich sind.

Der dritte Schlitten 31, der über die Führungselemente 57 an den Führungsschienen 56a, 56b in vertikaler Richtung verfahrbar ist und somit als Vertikalschlitten bezeichnet werden kann, trägt die Bearbeitungsspindel 11. Die Bearbeitungsspindel 11 kann insbesondere eine Frässpindel sein. Sie kann aber auch durch eine beliebige sonstige geeignete Werkzeugspindel, einen Laserkopf oder dgl. gebildet sein. In der vorliegenden Ausführungsform weist die Frässpindel 7 vorzugsweise eine zusätzliche Schwenkachse A um eine horizontale Achse, die im Wesentlichen parallel zu der ersten horizontalen Richtung x verläuft, sowie eine hierzu senkrechte Drehachse C auf. Es könnte auch eine weitere, zu der Schwenkachse A senkrechte Schwenkachse B vorgesehen sein. Die Bearbeitungsspindel 11 könnte auch keine zusätzlichen Dreh- und Schwenkachsen außer einer Bearbeitungsachse aufweisen.

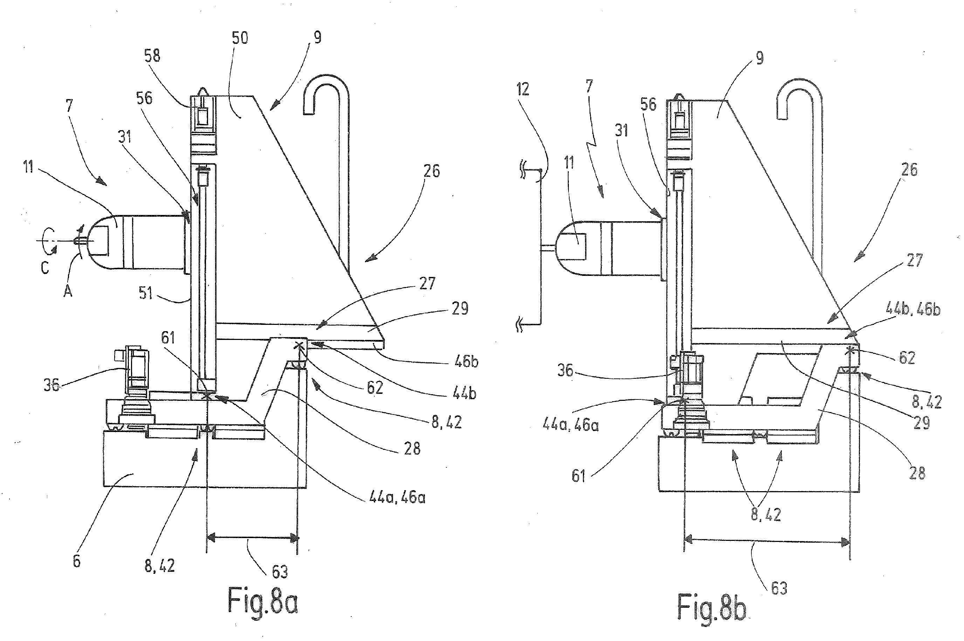

Zur Erläuterung der Funktionsweise, der insoweit beschriebenen Positioniervorrichtung 26 wird zusätzlich auf die Figuren 8a und 8b Bezug genommen, die die Positioniervorrichtung 26 mit dem Maschinenbett 6, dem Kreuzschlitten 27 und dem Träger 9 in Seitenansichten während eines Positioniervorgangs zeigen. Bei dem Positioniervorgang wird die Bearbeitungsspindel 9 in Bezug auf ein hier nicht näher dargestelltes Werkstück 12 positioniert, um dieses zu bearbeiten. Die Positionierung kann auch gleichzeitig mit der Bearbeitung des Werkstücks 12 erfolgen. Die Positioniervorrichtung 26 funktioniert wie folgt:
Es wird angenommen, dass sich das Werkstück 12 in der in den Figuren 1-3 dargestellten vertikalen Bearbeitungsposition befindet. Ferner wird angenommen, dass sich die Bearbeitungsspindel in der in den Figuren 1-3 dargestellten Position befindet, bei der die Bearbeitungsspindel 11 wenigstens in der zweiten horizontalen Richtung z am weitesten von dem Werkstück 12 entfernt angeordnet ist. Dieser Zustand ist auch in Fig. 8a dargestellt. Zur Bearbeitung des Werkstücks 12 kann die Bearbeitungsspindel 11 in den beiden horizontalen Richtungen x, z und in der Vertikalrichtung y den Erfordernissen gemäß in die jeweilige Bearbeitungsposition überführt werden.

Zum Verfahren in der ersten horizontalen Richtung oder Längsrichtung x wird der Motor 36 durch eine hier nicht näher dargestellte Steuereinrichtung, insbesondere eine CNC-Steuerung, in der Längsrichtung x an den Längsführungen 8 des Maschinenbetts 6 geführt verfahren. Bei der Bewegung in der Längsrichtung x ist der Kreuzschlitten 27, insbesondere der erste Schlitten oder Längsschlitten 28, in den Führungsschienen 8a, 8b und 8c mit einem konstanten Führungsabstand steif und stabil geführt, so dass eine hohe Bewegungsdynamik mit hohen Verfahrgeschwindigkeiten in der Längsrichtung x ermöglicht sind. Durch die abgesetzte Form des ersten und zweiten Schlittens 28, 29 und die mit Öffnungen und Durchbrüchen ausgesparte Ausführungsform des Trägers 9 ist die bewegte Masse vorteilhafterweise reduziert, was die hohe Bewegungsdynamik zusätzlich fördert.

Gleichzeitig oder nach dem Verfahren in der Längsrichtung x kann die Bearbeitungseinheit 7 auch in die zweite horizontale Richtung oder Querrichtung z auf das Werkstück 12 zu (Zustellbewegung) verfahren werden. Hierzu wird der wenigstens eine Motor 47 für den zweiten Schlitten oder Querschlitten 29 geeignet angesteuert, um den Querschlitten 29 entsprechend zu verfahren. Dabei wird der Querschlitten 29 in den Querführungen 44 präzise geführt. Insbesondere steht hierzu das erste Paar 46a der zweiten Führungselemente, z.B. Laufschienenelemente, mit dem Führungsschienenpaar 44a in Eingriffs- oder Wirkverbindung, während das zweite Paar 46b der zweiten Führungselemente 46 des Querschlittens 29 mit dem zweiten Paar 44b Führungsschienen an dem Längsschlitten 28 in Eingriffs- bzw. Wirkverbindung steht.

Die im Wesentlichen äußerste Führungsstelle, an der die ersten Paare Führungsschienen und Führungselemente 44a, 46a miteinander in Eingriff stehen, ist in Fig. 8a mit 61 bezeichnet, während die zweite, im Wesentlichen äußerste Führungsstelle, an der die zweiten Paare der Führungsschienen und Führungselemente 44b, 46b miteinander in Eingriff stehen, mit 62 bezeichnet ist. Der Abstand zwischen der ersten und der zweiten Führungsstelle 61, 62 soll als der Führungsabstand 63 (in der Querrichtung z) bezeichnet werden.

Wie aus den Figuren 8a und 8b hervorgeht, nimmt der Führungsabstand 63 zu, während der zweiten Schlitten 29 des Kreuzschlittens 27 relativ zu dem ersten Schlitten 28 in der ersten horizontalen Richtung bzw. Querrichtung z zu dem Werkstück 12 hin verfahren wird. Der zunehmende Führungsabstand 63 erhöht die Stabilität und Genauigkeit der Führung.

In der in Fig. 8b dargestellten Bearbeitungsposition ist der Führungsabstand 63 am größten, was auch die höchste Stabilität, Steifigkeit und Genauigkeit der Führung zur Folge hat. Dadurch kann eine hohe Positioniergenauigkeit erreicht werden, die auch eine hohe Bearbeitungsqualität und somit qualitativ hochwertige Arbeitsergebnisse bedingt.

Gleichzeitig oder nach dem Verfahren in der Längsrichtung x und der Querrichtung z kann die Bearbeitungseinheit 7 auch in die vertikale Richtung y verfahren werden. Hierzu werden die Motoren 58 geeignet angesteuert, um den dritten Schlitten 31 in der vertikalen Richtung y anzutreiben. Bei der entsprechenden vertikalen Verfahrbewegung wird der dritten Schlitten 31 in den Vertikalführungen 56 präzise geführt.

Bei der Positionierung in allen drei Richtungen x, y, und z ist stets eine stabile, steife und genaue Führung geschaffen, wobei die Stabilität und Steifigkeit in der Bearbeitungsposition vorteilhafterweise zusätzlich erhöht ist. Der Aufbau der Positioniervorrichtung 26 ist sehr einfach, kompakt, struktursteif und kostengünstig. Er erfordert eine nur geringe Standfläche, wobei die Basisseite 32 des Maschinenbetts 6 reduziert sein kann. Die Positioniervorrichtung 26 ermöglicht einen großen Führungs- und Arbeitsbereich bei nur relativ gering über das Maschinenbett 6 hinaus vorragendem Kreuzschlitten 27. Ferner sorgen die optimierte Form der Säule 50, die darin vorgesehenen Aussparungen und die abgesetzten Ausgestaltungen der beiden Schlitten 28, 29 des Kreuzschlittens 27 für eine Reduktion der bewegten Masse und somit eine Erhöhung der Bewegungsdynamik. Die Form fördert kurze, wirksame Kraftableitungswege der bei der Bearbeitung des Werkstücks 12 auf die Bearbeitungsspindel 11 einwirkenden Kräfte.

Im Rahmen der Erfindung sind zahlreiche Modifikationen möglich. Während die Erfindung hier im Zusammenhang mit einem Bearbeitungszentrum 1 dargestellt ist, das sich zur Großteilebearbeitung eignet, kann das Bearbeitungszentrum auch durch eine kleinere Einzelbearbeitungsmaschine gebildet sein. Während ferner hier ein Horizontalbearbeitungszentrum 1 veranschaulicht und beschrieben ist, kann die Positioniervorrichtung 26 auch zur Positionierung eines Werkzeugs in einem Vertikalbearbeitungszentrum oder einer Vertikalbearbeitungsmaschine verwendet werden. Alternativ oder zusätzlich könnte die Positioniervorrichtung 26 auch zur Positionierung des Werkstücks in die Bearbeitungsposition eingesetzt werden. Während ferner in der dargestellten Ausführungsform das Maschinenbett 6 mit einer abgesetzt ausgebildeten Oberseite 33 veranschaulicht ist, ist diese Ausgestaltung nicht zwingend erforderlich, so dass die Oberseite 33 des Maschinenbetts 6 auch eben ausgebildet sein könnte. Wichtig ist, dass der Kreuzschlitten 27, insbesondere der erste und der zweite Schlitten 28, 29 eine entsprechend abgesetzte Konfiguration aufweisen, die auch die entsprechende Anordnung der Führungen und Führungselemente 44, 46 ermöglicht, um den Führungsabstand 63 bei einer Zustellbewegung des Werkzeugs (bzw. Werkstücks) und somit die Steifigkeit, Stabilität und Genauigkeit der Führung vergrößern zu können. Die abgesetzte Konfiguration des Maschinenbetts 6 sorgt jedoch zusätzlich für eine Reduktion der bewegten Masse, eine bessere Steifigkeit, einschließlich Torsionssteifigkeit des Aufbaus sowie eine gute Abstützung und Ableitung von Kräften während der Bearbeitung.

Es ist eine Positioniervorrichtung 26, insbesondere Werkzeugpositioniervorrichtung, für ein Bearbeitungszentrum 1 geschaffen, die einen Kreuzschlitten 27 mit einem ersten Schlitten 28, der in einer Längsrichtung x des Bearbeitungszentrums 1 verfahrbar ist, und einem zweiten Schlitten 29, der in einer Querrichtung z relativ zu dem ersten Schlitten 28 verfahrbar ist, aufweist. Der erste und der zweite Schlitten 28, 29 weisen eine zueinander passende abgesetzte Konfiguration der einander gegenüberliegenden Seiten 39, 48 auf, die miteinander wirkende Führungen 44 und Führungselemente 46 tragen, um den zweiten Schlitten 29 in der Querrichtung z zu führen. Diese Führungen 44 und Führungselemente 46 sind zum Teil in unterschiedlichen Höhen in einer vertikalen Richtung y derart angeordnet, dass der zweite Schlitten 29 an dem ersten Schlitten 28 an wenigstens zwei voneinander getrennten Führungsstellen 61, 62 geführt ist, wobei der Führungsabstand 63 zwischen den Führungsstellen 61, 62 bei einer Verfahrbewegung des zweiten Schlittens 29 relativ zu dem ersten Schlitten 28 in der Querrichtung z variiert. Insbesondere kann der Führungsabstand 63 bei einem Zustellvorgang der Positioniervorrichtung 26 vergrößert werden, um die Steifigkeit und Stabilität der Führung für die Bearbeitung zu erhöhen. Ferner ist ein Bearbeitungszentrum 1, insbesondere ein Horizontalbearbeitungszentrum, mit einer derartigen Positioniervorrichtung 26 geschaffen.

## Patentansprüche

1. Positioniervorrichtung, insbesondere Werkzeugpositioniervorrichtung, für ein Bearbeitungszentrum,
mit einem ersten Schlitten (28), der erste Führungselemente (42) trägt, die zur Wirkverbindung mit ersten Führungen (8) eingerichtet sind, um den ersten Schlitten (28) im Einsatz in einer ersten horizontalen Richtung (x) verfahrbar zu führen, wobei der erste Schlitten (28) zweite Führungen (44) trägt, die im Einsatz in einer zweiten horizontalen Richtung (z), quer zu der ersten horizontalen Richtung (x) verlaufen, und
mit einem zweiten Schlitten (29), der zweite Führungselemente (46) zur Wirkverbindung mit den zweiten Führungen (44) des ersten Schlittens (28) aufweist, um den zweiten Schlitten (29) im Einsatz in der zweiten horizontalen Richtung (z) an dem ersten Schlitten (28) verfahrbar zu führen, **dadurch gekennzeichnet, dass** die zweiten Führungselemente (46) und die zweiten Führungen (44) jeweils zum Teil in unterschiedlichen Höhen in einer vertikalen Richtung (y), die senkrecht zu der ersten und der zweiten horizontalen Richtung (x, z) verläuft, derart angeordnet sind, dass der zweite Schlitten (29) an dem ersten Schlitten (28) an wenigstens zwei voneinander getrennten Führungsstellen (61, 62) geführt ist, deren Abstand (63) bei einer Verfahrbewegung des zweiten Schlittens (29) relativ zu dem ersten Schlitten (28) variiert.

2. Positioniervorrichtung nach Anspruch 1, **dadurch gekennzeichnet, dass** der erste und der zweite Schlitten (28, 29) einen Kreuzschlitten (27) bilden, mit dem ein Werkstück (12) und/oder Werkzeug (7) wenigstens in die erste und die zweite horizontale Richtung (x, z) motorisch verfahrbar ist/sind, wobei die erste und die zweite horizontale Richtung (x, z) senkrecht zueinander ausgerichtet sind.

3. Positioniervorrichtung nach Anspruch 1 oder 2, **dadurch gekennzeichnet, dass** der erste Schlitten (28) eine abgesetzt ausgebildete Oberseite (39) aufweist, die eine erste horizontale Ebene (43a) und eine zweite horizontale Ebene (43b) aufweist, die in der senkrechten Höhenrichtung (y) oberhalb der ersten horizontalen Ebene (43a) angeordnet ist.

4. Positioniervorrichtung nach Anspruch 3, **dadurch gekennzeichnet, dass** die zweiten Führungen (44) wenigstens ein erstes Paar paralleler Führungsschienen (44a), die sich an der ersten horizontalen Ebene (43a) erstrecken, und wenigstens ein weiteres Paar paralleler Führungsschienen (44b) aufweist, die sich an der zweiten horizontalen Ebene (43b) erstrecken.

5. Positioniervorrichtung nach Anspruch 3 oder 4, **dadurch gekennzeichnet, dass** die erste horizontale Ebene (43a) und die zweite horizontale Ebene (43b) durch eine Schrägebene (43c) der Oberseite (39) miteinander verbunden sind, die zu der ersten und der zweiten horizontalen Richtung (x, z) und zu der vertikalen Richtung (y) geneigt verläuft.

6. Positioniervorrichtung nach Anspruch 4 oder 5, **dadurch gekennzeichnet, dass** der zweite Schlitten (29) eine abgesetzt ausgebildete Unterseite (48) aufweist, die passend zu der abgesetzt ausgebildeten Oberseite (39) des ersten Schlittens (28) ausgebildet ist und eine erste horizontale Fläche (49a) und eine zweite horizontale Fläche (49b) umfasst, wobei die erste horizontale Fläche (49a) wenigstens ein erstes Paar Schienenlaufelemente (46a) der zweiten Führungselemente (46) aufweist, die zur Wirkverbindung mit dem ersten Paar Führungsschienen (44a) des ersten Schlittens (28) angeordnet und eingerichtet sind, und wobei die zweite horizontale Fläche (49b) wenigstens ein weiteres Paar Schienenlaufelemente (46b) der zweiten Führungselemente (46) aufweist, die zur Wirkverbindung mit dem weiteren Paar Führungsschienen (44b) des ersten Schlittens (28) angeordnet und eingerichtet sind.

7. Positioniervorrichtung nach Anspruch 6, **dadurch gekennzeichnet, dass** die Schienenlaufelemente (46a, 46b) und die Führungsschienen (44a, 44b) derart angeordnet sind, dass im Einsatz ein Führungsabstand (63) zwischen einer ersten Führungsstelle (61), an der das erste Paar Schienenlaufelemente (46a) mit dem ersten Paar Führungsschienen (44a) im Eingriff steht, und einer zweiten Führungsstelle (62), an der das weitere Paar Schienenlaufelemente (46b) mit dem weiteren Paar Führungsschienen (44b) im Eingriff steht, variiert, während der zweite Schlitten (29) relativ zu dem ersten Schlitten (28) in der zweiten horizontalen Richtung (z) verfahren wird.

8. Positioniervorrichtung nach Anspruch 6 oder 7, **dadurch gekennzeichnet, dass** die erste horizontale Ebene (43a) und die Führungsschienen (44a) an dieser eine größere Dimension in der zweiten horizontalen Richtung (z) als die zweite horizontale Ebene (43b) und die zweiten Führungsschienen (44b) an dieser aufweisen und dass die erste horizontale Fläche (49a) und die Schienenlaufelemente (46a) an dieser eine geringere Dimension in der zweiten horizontalen Richtung (z) als die zweite horizontale Fläche (49b) und die Schienenlaufelemente (46b) an dieser aufweisen.

9. Positioniervorrichtung nach einem der vorhergehenden Ansprüche, **dadurch gekennzeichnet, dass** der erste Schlitten (28) ferner eine abgesetzte Unterseite (38) mit zu den Ebenen (43a-c) der Oberseite (39) parallelen Ebenen (41a-c) aufweist.

10. Positioniervorrichtung nach einem beliebigen der vorhergehenden Ansprüche, **dadurch gekennzeichnet, dass** sie zur Positionierung einer Bearbeitungseinheit (7) in einem Bearbeitungszentrum (1), insbesondere einem Horizontalbearbeitungszentrum, eingerichtet ist, wobei der zweite Schlitten (29) einen Träger (9) für die Bearbeitungseinheit (7), insbesondere eine Fräseinheit, trägt.

11. Bearbeitungszentrum zur Bearbeitung von Werkstücken, insbesondere von Großteilen beim Werkzeug-, Formen- und Modellbau oder bei der Produktion in der Automobil- oder Flugzeugindustrie,
mit einer Bearbeitungsstation (2), die eine Bearbeitungseinheit (7) zur Bearbeitung eines Werkstücks (12) trägt; und
mit einer Positioniervorrichtung (26) nach einem beliebigen der vorhergehenden Ansprüche, die zur Positionierung des Werkstücks (12) und der Bearbeitungseinheit (7) relativ zueinander eingerichtet ist,
wobei dem ersten und dem zweiten Schlitten (28, 29) Antriebseinrichtungen (36, 47) zugeordnet sind, um sie in der ersten bzw. zweiten horizontalen Richtung (x, z) entlang der ersten bzw. zweiten Führungen (8, 44) motorisch zu verfahren.

12. Bearbeitungszentrum nach Anspruch 11, das ein Horizontalbearbeitungszentrum (1) bildet, bei dem die Bearbeitungseinheit (7) in einer im Wesentlichen horizontalen Stellung an einem Träger (9) gehaltert ist und Werkstücke (12) auf einer Werkstückpalette (19) in horizontaler Stellung beladen und in vertikaler Stellung bearbeitet werden, und das ferner eine Rüststation (14) zum Aufspannen von Werkstücken (12) auf eine Werkstückpalette (19) und/oder eine Pufferstation (16) zur vorübergehenden Zwischenlagerung einer Werkstückpalette (19) mit darauf aufgespanntem Werkstück (12), Werkstückpositioniermittel (21, 22), die dazu eingerichtet sind, eine Werkstückpalette (19) mit dem Werkstück (12) während eines Transports zwischen einer von der Rüststation (14), der Pufferstation (16) und der Bearbeitungsstation (2) und einer anderen der Stationen (14, 16, 2) von einer Horizontalstellung in eine Vertikalstellung oder umgekehrt umzusetzen, wobei die Positioniervorrichtung (26) zur Positionierung der Bearbeitungseinheit (7) relativ zu dem Werkstück (12) dient.

13. Bearbeitungszentrum nach Anspruch 11 oder 12, **dadurch gekennzeichnet, dass** die Bearbeitungseinheit (7) eine Bearbeitungsspindel (11), insbesondere Frässpindel, aufweist und die Bearbeitungsspindel (11) weitere Dreh-, Schwenk- und/oder Bearbeitungsachsen (A, B, C) aufweist.

14. Bearbeitungszentrum nach einem der Ansprüche 11-13, **dadurch gekennzeichnet, dass** es ein Maschinenbett (6) aufweist, dessen Längserstreckung eine Längsrichtung definiert, die parallel zu der ersten horizontalen Richtung (x) verläuft, wobei an dem Maschinenbett (6) der erste Schlitten (28) der Positioniervorrichtung (26) in der Längsrichtung (x) bewegbar gelagert und geführt ist.

15. Bearbeitungszentrum nach Anspruch 14, **dadurch gekennzeichnet, dass** das Maschinenbett (6) eine obere Tragfläche (34) aufweist, die in Längsrichtung (x) verlaufende Maschinenbett-Führungsschienen (8a-c) trägt, die die ersten Führungen (8) bilden, auf denen der erste Schlitten (28) in der ersten horizontalen Richtung (x) verfahrbar geführt ist.

16. Bearbeitungszentrum nach Anspruch 15, **dadurch gekennzeichnet, dass** die obere Tragfläche (34) des Maschinenbetts (6) eine abgesetzte Konfiguration mit einem ersten horizontalen Tragflächenabschnitt (34a) auf einer ersten vertikalen Höhe, der wenigstens eine oder mehrere der Maschinenbett-Führungsschienen (8a) trägt, und einem zweiten horizontalen Tragflächenabschnitt (34b) auf einer zweiten vertikalen Höhe aufweist, der wenigstens eine weitere der Maschinenbett-Führungsschienen (8b) trägt, wobei der erste und der zweite horizontale Tragflächenabschnitt (34a, 34b) durch einen vorzugsweise schräg verlaufenden mittleren Flächenabschnitt (34c) miteinander verbunden sind.

17. Bearbeitungszentrum nach einem beliebigen der Ansprüche 11-16, **dadurch gekennzeichnet, dass** der zweite Schlitten (29) integraler Teil eines Trägers (9), insbesondere eines Trägers für eine Bearbeitungseinheit (7), ist, wobei der Träger (9) ferner vertikal ausgerichtete Führungen (56) aufweist, an denen ein Vertikalschlitten (31), insbesondere ein die Bearbeitungseinheit (7) tragender Vertikalschlitten, in der vertikalen Richtung (y) motorisch verfahrbar gelagert und geführt ist.

## Claims

1. Positioning device, in particular tool-positioning device, for a machining centre¹, with a first slide (28) carrying first guide elements (42) which are configured for active connection with first guides (8) in order in use to guide the first slide (28) so as to be movable in a first horizontal direction (x), wherein the first slide (28) carries second guides (44) which in use run in a second horizontal direction (z) transversely to the first horizontal direction (x), and
with a second slide (29) carrying second guide elements (46) which are configured for active connection with the second guides (44) of the first slide (28) in order in use to guide the second slide (29) so as to be movable in a second horizontal direction (z) on the first slide (28),
**characterised in that** the second guide elements (46) and the second guides (44) are each arranged partly at different heights in a vertical direction (y) running perpendicularly to the first and second horizontal directions (x, z), such that the second slide (29) is guided on the first slide (28) at least at two separate guide points (61, 62), the spacing (63) between which varies on a travel movement of the second slide (29) relative to the first slide (28).

2. Positioning device according to claim 1, **characterised in that** the first and the second slides (28, 29) form a compound slide (27) with which a workpiece (12) and/or a tool (7) is movable in motorized fashion at least in the first and the second horizontal directions (x, z), wherein the first and second horizontal directions (x, z) are oriented perpendicularly to each other.

3. Positioning device according to claim 1 or 2, **characterised in that** the first slide (28) has a shouldered top side (39) which has a first horizontal plane (43a) and a second horizontal plane (43b) arranged above the first horizontal plane (43a) in the vertical height direction (y).

4. Positioning device according to claim 3, **characterised in that** the second guides (44) have at least one first pair of parallel guide rails (44a) which extend on the first horizontal plane (43a), and at least one further pair of parallel guide rails (44b) which extend on the second horizontal plane (43b).

5. Positioning device according to claim 3 or 4, **characterised in that** the first horizontal plane (43a) and the second horizontal plane (43b) are connected together by an oblique plane (43c) of the top side (39) which runs inclined relative to the first and second horizontal directions (x, z) and to the vertical direction (y).

6. Positioning device according to claim 4 or 5, **characterised in that** the second slide (29) has a shouldered underside (48) which is configured correspondingly to the shouldered top side (39) of the first slide (28) and comprises a first horizontal face (49a) and a second horizontal face (49b), wherein the first horizontal face (49a) has at least one first pair of rail-running elements (46a) of the second guide elements (46) which are arranged and configured for active connection with the first pair of guide rails (44a) of the first slide (28), and wherein the second horizontal face (49b) has at least one further pair of rail-running elements (46b) of the second guide elements (46) which are arranged and configured for active connection with the further pair of guide rails (44b) of the first slide (28).

7. Positioning device according to claim 6, **characterised in that** the rail-running elements (46a, 46b) and the guide rails (44a, 44b) are arranged such that in use, a guide spacing (63) between a first guide point (61) at which the first pair of rail-running elements (46a) are in engagement with the first pair of guide rails (44a), and a second guide point (62) at which the further pair of rail-running elements (46b) are in engagement with the further pair of guide rails (44b), varies while the second slide (29) is moved in the second horizontal direction (z) relative to the first slide (28).

8. Positioning device according to claim 6 or 7, **characterised in that** the first horizontal plane (43a) and the guide rails (44a) thereon have a greater dimension in the second horizontal direction (z) than the second horizontal plane (43b) and the second guide rails (44b) thereon, and that the first horizontal face (49a) and the rail-running elements (46a) thereon have a smaller dimension in the second horizontal direction (z) than the second horizontal face (49b) and the rail-running elements (46b) thereon.

9. Positioning device according to any of the preceding claims, **characterised in that** the first slide (28) furthermore has a shouldered underside (38) with planes (41a-c) parallel to the planes (43a-c) of the top side (39).

10. Positioning device according to any of the preceding claims, **characterised in that** it is configured for positioning a machining unit (7) in a machining centre (1), in particular a horizontal machining centre, wherein the second slide (29) carries a carrier (9) for the machining unit (7), in particular a milling unit.

11. Machining centre for machining workpieces, in particular large components in the construction of tools, forms and models or in production in the automotive or aircraft industry,
with a machining station (2) which carries a machining unit (7) for machining a workpiece (12), and
with a positioning device (26) according to any of the preceding claims, which is configured for positioning the workpiece (12) and the machining unit (7) relative to each other,
wherein drive devices (36, 47) are assigned to the first and second slides (28, 29) in order to move them in motorized fashion in the first and second horizontal directions (x, z) along the respective first and second guides (8, 44).

12. Machining centre according to claim 11, which forms a horizontal machining centre (1) in which the machining unit (7) is held in a substantially horizontal position on a carrier (9), and workpieces (12) are loaded on a workpiece pallet (19) in the horizontal position and machined in the vertical position, and which furthermore comprises a fitting station (14) for clamping workpieces (12) onto a workpiece pallet (19) and/or a buffer station (16) for temporary storage of a workpiece pallet (19) with workpiece (12) clamped thereon, and workpiece positioning means (21, 22) which are configured to move a workpiece pallet (19) with the workpiece (12) from a horizontal position into a vertical position or vice versa during transport between one of the fitting station (14), buffer station (16) and machining station (2) and another of said stations (14, 16, 2), wherein the positioning device (26) serves for positioning the machining unit (7) relative to the workpiece (12).

13. Machining centre according to claim 11 or 12, **characterised in that** the machining unit (7) has a machining spindle (11), in particular a milling spindle, and the machining spindle (11) comprises further turning, pivoting and/or machining axes (A, B, C).

14. Machining centre according to any of claims 11 to 13, **characterised in that** it has a machine bed (6), the longitudinal extension of which defines a longitudinal direction running parallel to the first horizontal direction (x), wherein the first slide (28) of the positioning device (26) is mounted on the machine bed (6) and guided so as to be movable in the longitudinal direction (x).

15. Machining centre according to claim 14, **characterised in that** the machine bed (6) has an upper carrying face (34) carrying machine bed guide rails (8a-c) which run in the longitudinal direction (x) and form the first guides (8), and on which the first slide (28) is guided so as to be movable in the first horizontal direction (x).

16. Machining centre according to claim 15, **characterised in that** the upper carrying face (34) of the machine bed (6) has a shouldered configuration which has a first horizontal carrying face portion (34a) at a first vertical height and carrying at least one or more of the machine bed guide rails (8a), and a second horizontal carrying face portion (34b) at a second vertical height and carrying at least one further of the machine bed guide rails (8b), wherein the first and second horizontal carrying face portions (34a, 34b) are connected together by a middle face portion (34c) running preferably obliquely.

17. Machining centre according to any of claims 11 to 16, **characterised in that** the second slide (29) is an integral part of a carrier (9), in particular a carrier for a machining unit (7), wherein the carrier (9) furthermore has vertically oriented guides (56) on which a vertical slide (31), in particular a vertical slide carrying the machining unit (7), is mounted and guided in motorized fashion so as to be movable in the vertical direction (y).

## Revendications

1. Dispositif de positionnement, en particulier dispositif de positionnement d'outils, destiné à un centre d'usinage,
comportant un premier chariot (28) qui porte des premiers éléments de guidage (42), qui sont agencés en vus d'une liaison fonctionnelle avec des premières glissières de guidage (8) en vue de guider le premier chariot (28) de façon à ce qu'en fonctionnement, il puisse être déplacé dans une première direction horizontale (x), le premier chariot (28) étant doté de deux glissières (44) qui, en fonctionnement, s'étendent dans une deuxième direction horizontale (z) transversalement à la première direction horizontale (x) et
comportant un deuxième chariot (29) qui présente des deuxièmes éléments de guidage (46) en vue d'une liaison fonctionnelle avec les deuxièmes glissières (44) du premier chariot (28), dans le but de guider le deuxième chariot (29) de façon à ce qu'en fonctionnement il puisse être déplacé dans la deuxième direction horizontale (z), sur le premier chariot (28),
**caractérisé en ce que** les deuxièmes éléments de guidage (46) et les deuxièmes glissières (44) sont, dans chaque cas, disposés partiellement à des hauteurs différentes dans une direction verticale (y) qui s'étend perpendiculairement à la première direction horizontale (x) et à la deuxième direction horizontale (z) de telle manière que le deuxième chariot (29) est guidé sur le premier chariot (28) de telle manière que le deuxième chariot (29) est guidé sur le premier chariot (28) sur au moins deux emplacements de guidage (61, 62) séparés l'un de l'autre, dont l'écart (63) varie lors d'un mouvement de déplacement du deuxième chariot (29) par rapport au premier chariot (28).

2. Dispositif de positionnement selon la revendication 1 **caractérisé en ce que** le premier et le deuxième chariots (28, 29) forment un chariot à disposition en croix (27), au moyen duquel une pièce à usiner (12) et/ou un outil (7) est(sont) susceptible(s) d'être déplacé(déplacés) au moins dans la première direction horizontale (x) et dans la deuxième direction horizontale (z) de façon motorisée, la première direction horizontale (x) et la deuxième direction horizontale (z) étant orientées perpendiculairement l'une à l'autre.

3. Dispositif de positionnement selon la revendication 1 ou 2 **caractérisé en ce que** le premier chariot (28) présente une face supérieure étagée (39) qui présente un premier plan horizontal (43a) et un deuxième plan horizontal (43b) qui est disposé au-dessus du premier plan horizontal (43a) dans la direction de la hauteur perpendiculaire (y).

4. Dispositif de positionnement selon la revendication 3 **caractérisé en ce que** les deuxième glissières (44) présentent au moins une première paire de rails de guidage parallèles (44a), qui s'étendent sur le premier plan horizontal (43a) et au moins une autre paire de rails de guidage parallèles (44b) qui s'étendent sur le deuxième plan horizontal (43b).

5. Dispositif de positionnement selon la revendication 3 ou 4 **caractérisé en ce que** le premier plan horizontal (43a) et le deuxième plan horizontal (43b) sont reliés entre eux par un plan oblique (43c) de la face supérieure (39), qui s'étend de façon inclinée par rapport à la première direction horizontale (x) et par rapport à la deuxième direction horizontale (z), ainsi que par rapport à la direction verticale (y).

6. Dispositif de positionnement selon la revendication 4 ou 5 **caractérisé en ce que** le deuxième chariot (29) présente une face inférieure étagée (48) qui est conformée en étant adaptée à la face supérieure (39) de forme étagée du premier chariot (28) et qui comprend une première surface horizontale (49a) et une deuxième surface horizontale (49b), la première surface horizontale (49a) présentant au moins une première paire d'éléments de déplacement à rails (46a) des deuxièmes éléments de guidage (46), lesquels sont disposés et agencés en vue d'une liaison fonctionnelle avec la première paire de rails de guidage (44a) du premier chariot (28), et la deuxième surface horizontale (49b) présentant au moins une autre paire d'éléments de déplacement à rails (46b) des deuxièmes éléments de guidage (46), qui sont disposés et agencés en vue d'une liaison fonctionnelle avec l'autre paire de rails de guidage (44b) du premier chariot (28).

7. Dispositif de positionnement selon la revendication 6 **caractérisé en ce que** les éléments de déplacement à rails (46a, 46b) et les rails de guidage (44a, 44b) sont disposés de telle manière que, lors du fonctionnement, un écart de guidage (63) entre un premier emplacement de guidage (61) où la première paire d'éléments de déplacement à rails (46a) se trouve en prise avec la première paire de rails de guidage (44a), et un deuxième emplacement de guidage (62) où l'autre paire d'éléments de déplacement à rails (46b) se trouve en prise avec l'autre paire de rails de guidage (44b), varie pendant que le deuxième chariot (29) est déplacé par rapport au premier chariot (28) dans la deuxième direction horizontale (z).

8. Dispositif de positionnement selon la revendication 6 ou 7 **caractérisé en ce que** le premier plan horizontal (43a) et les rails de guidage (44a) situés sur celui-ci ont une dimension plus importante dans la deuxième direction horizontale (z) que le deuxième plan horizontal (43b) et les deuxièmes rails de guidage (44b) et **en ce que** la première surface horizontale (49b) et les éléments de déplacement à rails (46a) situés sur celle-ci ont une plus faible dimension dans la deuxième direction horizontale (z) que la deuxième surface horizontale (49b) et les éléments de déplacement à rails (46b) situés sur celle-ci.

9. Dispositif de positionnement selon l'une des revendications qui précèdent, **caractérisé en ce que** le premier chariot (28) présente en outre une face inférieure étagée (38) comportant des plans (41a à c) parallèles aux plans (43a à c) de la face supérieure (39).

10. Dispositif de positionnement selon l'une quelconque des revendications qui précèdent, **caractérisé en ce qu'**il est implanté, en vue du positionnement d'un ensemble d'usinage (7), dans un centre d'usinage (1), en particulier dans un centre d'usinage horizontal, le deuxième chariot (29) portant un support (9) destiné à l'ensemble d'usinage (7) en particulier à un ensemble de fraisage.

11. Centre d'usinage destiné à l'usinage de pièces, en particulier de pièces de grande dimension dans la fabrication d'outils, de moules et de modèles ou dans la production dans l'industrie automobile ou l'industrie de la construction d'avions,
comportant un poste d'usinage (2) qui porte un ensemble d'usinage (7) destiné à l'usinage d'une pièce à usiner (12) ; et
comportant un dispositif de positionnement (26) selon une quelconque des revendications qui précèdent qui est installé en vue du positionnement de la pièce (12) à usiner et de l'ensemble d'usinage (7) l'un par rapport à l'autre,
des dispositifs d'entraînement (36, 47) étant affectés au premier et au deuxième chariots (28, 29) en vue de les déplacer de façon motorisée dans la première ou dans la deuxième direction horizontale (x, z) le long de la première ou le long de la deuxième glissière (8, 44).

12. Centre d'usinage selon la revendication 11 qui constitue un centre d'usinage horizontal (1) dans lequel l'ensemble d'usinage (7) est maintenu essentiellement dans une position horizontale sur un support (9) et dans lequel des pièces à usiner (12) sont chargées sur une palette de pièces à usiner (19) dans une position horizontale et sont usinées en position verticale, et qui comporte en outre un poste de chargement (14) destiné à la fixation par serrage de pièces à usiner (12) sur une palette (19) pour pièces à usiner et/ou un poste tampon (16) destiné au stockage intermédiaire transitoire d'une palette (19) pour pièces à usiner comportant la pièce à usiner (12) fixée par serrage, des moyens de positionnement pour pièces à usiner (21, 22) qui sont installés dans le but de faire passer une palette (19) pour pièces à usiner, comportant la pièce à usiner (12), lors d'un transport entre l'un des postes, le poste de chargement (14), le poste tampon (16) et le poste d'usinage (2) et un autre des postes (14, 16, 2), d'une position horizontale à une position verticale, ou l'inverse, le dispositif de positionnement (26) servant au positionnement de l'ensemble d'usinage (7) par rapport à la pièce à usiner (12).

13. Centre d'usinage selon la revendication 11 ou 12, **caractérisé en ce que** l'ensemble d'usinage (7) présente une broche d'usinage (11), en particulier une broche de fraisage et **en ce que** la broche d'usinage (11) présente d'autres axes de rotation, de pivotement et/ou d'usinage (A, B, C).

14. Centre d'usinage selon une des revendications 11 à 13, **caractérisé en ce qu'**il présente une base de machine (6) dont l'étendue en longueur définit une direction longitudinale qui s'étend parallèlement à la première direction horizontale (x), le premier chariot (28) du dispositif de positionnement (26) étant monté et guidé sur la base (6) de la machine de manière à pouvoir être déplacé et guidé dans la direction longitudinale (x).

15. Centre d'usinage selon la revendication 14 **caractérisé en ce que** la base (6) de machine présente une surface de support supérieure (34) qui porte des rails de guidage (8a à c) de base de machine qui s'étendent dans la direction longitudinale (x), lesquels forment les premières guides (8) sur lesquels le premier chariot (28) est guidé de manière à pouvoir être déplacé dans la première direction horizontale (x).

16. Centre d'usinage selon la revendication 15 **caractérisé en ce que** la surface porteuse supérieure (34) de la base (6) de machine présente une configuration étagée comportant une première zone (34a) de surface porteuse horizontale à une première hauteur verticale qui porte au moins un ou plusieurs des rails de guidage (8a) de la base de machine, et une deuxième zone (34b) de surface porteuse horizontale, à une deuxième hauteur verticale, qui porte au moins un autre des rails de guidage (8b) de base de machine, la première et la deuxième zones (34a, 34b) de surface porteuse horizontale étant reliées l'une à l'autre par une zone de surface (9) médiane s'étendant de préférence obliquement.

17. Centre d'usinage selon l'une quelconque des revendications 11 à 16, **caractérisé en ce que** le deuxième chariot (29) constitue une partie intégrante d'un support (9) en particulier d'un support pour ensemble d'usinage (7), le support (9) présentant en outre des glissières (56) alignées verticalement, sur lesquelles un chariot vertical (31), en particulier un chariot vertical portant l'ensemble d'usinage (7) est monté et guidé de manière à pouvoir être déplacé de façon motorisée dans la direction verticale (y).
